Europäisches Patentamt

European Patent Office

Office européen des brevets

(19)

(11) Publication number: 0 398 852
A2

# (12) EUROPEAN PATENT APPLICATION

(21) Application number: 90830219.3

(22) Date of filing: 18.05.90

(51) Int. Cl.5: G01N 30/06, G01N 30/28

(30) Priority: 19.05.89 IT 2056089

(43) Date of publication of application:
22.11.90 Bulletin 90/47

(84) Designated Contracting States:
DE FR GB NL

(71) Applicant: CARLO ERBA STRUMENTAZIONE
S.p.A.
Casella Postale Aperta
I-20090 Rodano Milano(IT)

(72) Inventor: Mapelli, Giampietro
Via Lorenteggio 31/3
I-20146 Milano(IT)
Inventor: Trestianu, Sorin
Via Firenze 34
I-20090 Rodano (Milano)(IT)

(74) Representative: Marietti, Giuseppe
CENTRO DI CONSULENZA IN PROPRIETA'
INDUSTRIALE Viale Caldara, 38
I-20122 Milano(IT)

(54) A method for interfacing a system of supercritical fluid extraction (SFE) to a system of capillary gas chromatography (CGC), and related interface.

(57) The coupling between a system of supercritical fluid extraction (SFE) and a gas chromatographic analytical system with capillary columns (CGC) is obtained by separating the decompression stage of the extraction fluid from the sampling system and from the system of gas chromatographic separation.

The high pressure supercritical fluid is expanded outside of the gas chromatographic system, with a heated environment, and then it is carried a certain length, always under heating, before being fed to the chromatographic system.

The gas flows through a cold trap for reconcentration which entraps the components of the sample to be analysed eliminating the extraction fluid. The introduction of the entrapped compounds into the chromatographic column is then carried out by means of a process of thermal description.

Fig.1

# A METHOD FOR INTERFACING A SYSTEM OF SUPERCRITICAL FLUID EXTRACTION (SFE) TO A SYSTEM OF CAPILLARY GAS CHROMATOGRAPHY (CGC), AND RELATED INTERFACE

The present invention concerns a method and an equipment for interfacing on line an extraction system using fluid in supercritical conditions (SFE) to a system of gas chromatographic analysis with capillary columns (CGC).

The technique of extracting, by so-called static or dynamic systems, organic compounds from a solid or liquid matrix, using liquids or gases as extraction fluids is known. This technique, specially in the case of extraction with liquids, results to be relatively long and difficult, particularly because of the high sample dilution requiring subsequent stages of solvent removal, with dangers of sample loss and discrimination. The extraction with gas is limited due to the very weak extraction power of gas and generally requires the heating of the sample to increase volatility of the compounds to be extracted. Said procedure cannot be applied to thermolabile compounds or compounds with high molecular weight.

More recently, extraction with supercritical fluids was adopted, namely with fluids presenting conditions of pressure and temperature beyond their relevant critical points. This type of extraction provides considerable advantages, specially from the point of view of extraction speed and efficiency, precisely due to the physico-chemical characteristics of the supercritical fluids.

As compared to liquids, they are endowed with higher diffusivity and lower viscosity, which improves the mass transfer with reduction of the time required.

At the same time, supercritical fluids maintain, at appropriate pressures, densities which give them a solvation power comparable to that of liquids. Furthermore, acting on the fluid pressure, temperature and composition, it is possible to obtain a wide range of capacity and selectivity of extraction.

Said supercritical fluid extraction can be performed with different fluids, with respect to the solute features. However, the most frequently used fluid is $CO_2$ presenting the following critical values: critical temperature 32 degrees C; critical pressure 74 bar, and consequently it is generally used at values ranging between 40 and 100 degrees C and between 100 and 400 bar. As it can be seen, while the fluid temperature does not result particularly high, pressure values, on the contrary, are high and will have to be taken into consideration for the coupling, preferably on line, to the subsequent system of chromatographic analysis. In the case herein considered of coupling or interfacing to a system of gas chromatographic analysis with capillary columns, generally appropriate when the sample molecules are sufficiently volatile and thermostable, it is necessary to take into account the need of passing from a very high pressure to a pressure compatible with that of the gas chromatographic system, which is in general reduced and near (slightly above) the atmospheric one. This involves a very considerable expansion ratio to bring the supercritical fluid to the conditions of a normal gas at reduced overpressure, with consequent variations in the physico-chemical characteristics of the solvent-solute complex, which creates difficulties in performing an SFC/CGC interface which is reliable, versatile, non discriminating and mainly quantitative, namely allowing the components of the extracted sample to be quantitatively and not only qualitatively measured.

A proposal for interfacing an SFC with a CGC has already been presented (Steven B, Hawthorne and David J. Miller -Journal of Chromatography 403 (1987) 63-76), simply by applying at the end of a capillary coming out from the extractor a restriction capable of causing the desired pressure reduction, and by manually inserting said end directly into the capillary column of the gas chromatographic system, through a sampling system known as "cold on-column" or equivalent system.

This method, however, involves drawbacks which actually make the same hardly usable for current automatic analyses. First of all, the reconcentration capacity of the capillary gas chromatographic column is reduced, considering that the flowrate downstream of the restriction is in the range of 5-10 ml/min (which means a gas speed of the order of 1-2 m/sec approximately). Taking into account that under said conditions the sample inlet band is very large, an operation of sample reconcentration is required before the gas chromatographic analysis; said reconcentration must be performed in the column which has a limited reconcentration capacity. However, it must be kept in mind that, besides the carrier gas speed, during expansion the sample molecules acquire such high kinetic energy (even reaching supersonic speeds) that it is impossible to entrap them within the chromatographic column near the expansion point. Therefore, according to said previous proposal, even cooling the whole column, the reconcentration effect is very precarious and negatively affects the gas chromatographic separation.

The main problem, however, lies in the fact that decompression absorbs heat, which cools the column and freezes the supercritical fluid ($CO_2$ in this specific case) immediately at the restriction outlet, thus completely blocking the interface. The need of cooling the gas chromatographic oven to perform the sample trapping considerably increases the obstruction probabilities at the restriction outlet.

To overcome said inconveniences Wright and al. (Anal. Chem. 1987, 59, pages 640-644) feed the supercritical fluid through a selection valve and heat the decompression area placed in the gas chromatographic oven.

Nevertheless the problems relating to the poor sample reconcentration in the capillary gas chromatographic column still remain unsolved, because it always occurs that the conditions required for a good chromatographic analysis do not correspond to the conditions necessary for reconcentration.

This being stated, the object of the present invention is to provide a method and a device for interfacing on line an SFE system with a CGC system, which may be easy to be operated and automated, as well as reliable in its operation, not causing the abovereported inconveniences and allowing a quantitative analysis of the extracted samples.

According to the present invention, said method and equipment are characterised in that the supercritical fluid pressure reduction is performed outside and upstream of the gas chromatographic system, that the pressure reduction area is heated and the decompressed gas, at reduced overpressure, is carried a certain length towards the gas chromatographic system through a heated duct. This allows to avoid the inconveniences due to the fluid freezing at the restriction outlet, while in the transport section the kinetic energy of the sample molecules decreases and becomes uniform in a way that at the end of said transport section the molecules themselves result to be sufficiently "thermalised".

A make-up gas introduced in correspondence with the expansion area prevents the sample molecules from precipitating, reducing their partial pressure, and moreover helps to thermalise the same.

At this point a solvent/solute gas is obtained at conditions of pressure and temperature suitable for the gas chromatographic analysis which requires a sample reconcentration. The latter is carried out always outside of the chromatographic system, by means of a so-called "cold trap", known in itself (for example the one described in the Italian patent application N. 19600-A/85). The trap is arranged in a way as to cool the terminal end of the transport tube before it enters the gas chromatographic oven. The trap outlet opens in a fitting where comes the upstream end of the gas chromatographic capillary column for direct injection. The fitting is connected to an exhaust and splitting line controlled by a valve which remains open during reconcentration in the cold trap and closes during the subsequent sample introduction by thermal desorption. This allows to operate with high gas flows through the trap, exhausting towards the outside the extra gas and keeping the flow through the column at optimal values. Furthermore, a make-up gas feeding line feeds the area of connection with the top end of the gas chromatographic column. This feeding operates, during the reconcentration and then the splitting stages, in a way as to convey gas towards the outlet, assuring an appropriate gas flow in the column.

On the contrary, during the sample desorption from the cold trap towards the column, the make-up gas prevents the sample from reaching the dead spaces of the fitting and thus polluting them.

The invention will be now described by way of example with reference to the accompanying drawings, where:

figure 1 is a scheme illustrating the different stages of SFE-CGC interfacing;

figure 2 is a representation of the SFE-expansion and transfer tube fitting;

figure 3 is a schematic representation of a portion of SFE-CGC interface featuring a direct passage from SFE to the gas chromatographic system, upon passage through a reconcentration trap.

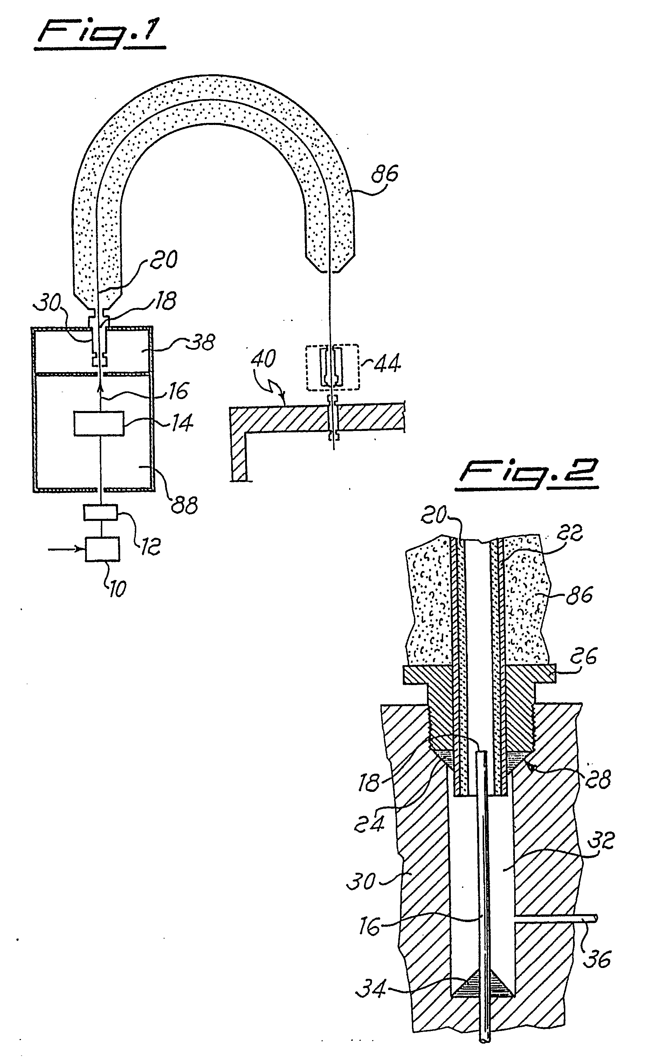

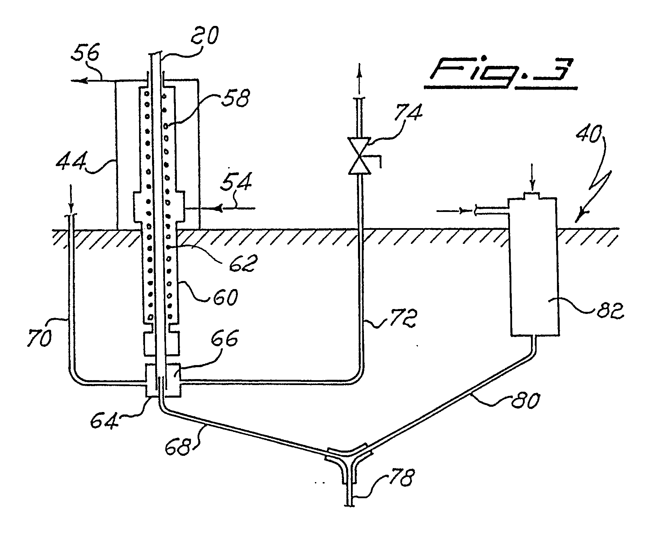

With reference first of all to figure 1, a pump 10 feeds fluid in supercritical conditions, possibly controlled by a valve 12, to an extractor 14, in the form of an extraction cell positioned for example in an oven 88 at controlled temperature (usually from 40 degrees C to 150 degrees C). The cell has a volume ranging within 0.4 and 50 ml and the operative pressure induced by the pump 10 obviously depends on the treated fluid and ranges for example from 100 to 400 bar in the case of $CO_2$. When leaving the extraction cell, the supercritical fluid is fed (continuously in the so-called dynamic operative mode) to a capillary 16 (better shown in fig. 2), the free end 18 of which bears a restrictor (which may be of a type known in itself) capable of maintaining the desired pressure conditions in the capillary 16, allowing the supercritical fluid to expand downstream of it, until it is reduced to gas with a pressure slightly higher than the ambient one.

As it is schematically shown in figure 1 and more in detail in figure 2, the capillary 16 (which has for example an outer diameter of 0.35 mm) ends within the open end of a tube 20, which will be called transfer tube, of greater inner diameter, for instance 0.53 mm.

The tube 20 is made of fused silica and provided with a metal sheath 22 and an insulating covering 86 for heat transmission and maintenance.

Said tube 20 is fixed, by means of a packing 24 and a nut 26, within a seat 28 of a heated small block 30, placed outside of the oven 88 of the extractor. The seat 28 of the small block 30 extends for a length 32 inside the block itself so as to airtightly accomodate, thanks to a sealing 34, the capillary 16, and to form a passage connected to a make-up gas feeding line 36.

The small block 30 is heated (as schematically shown by 38 in figure 1) so that the temperature of the expansion area, downstream of the flow limiting device 18, is sufficiently high as to prevent the expanded fluid from freezing. For example there may be heating temperatures ranging between 50 degrees C and 300-400 degrees C, the latter ones being particularly suitable for $CO_2$. Since the sample solubility in the supercritical fluid is higher than that in the corresponding gas, in order to avoid molecule precipitation after expansion, there is a make-up gas fed from the source 36 with appropriate flowrate.

As shown in fig. 1, the transport tube 20 extends for a certain length downstream of the expansion area, outside of the SFE and CGC systems, said portion being heated as well, generally at a temperature lower than that of the small block 30 (150-300 degrees C for $CO_2$), with the function of "thermalising" the molecules, reducing and uniforming the extremely high kinetic energy they are provided with at the restrictor 18 outlet.

For the correct and quantitative feeding of the gas thus obtained to the capillary gas chromatographic system (CGC) 40 (fig. 1), according to the invention, there is provided, between the downstream terminal area of the tube 20 and the CGC system 40, a reconcentration cold trap 44. The sample dilution is such that it is necessary to reconcentrate said sample by means of a cold trap 44, located outside and upstream of the gas chromatographic system. Said trap can be of a known type, for example even if not necessarily of the type described in the Italian patent application N. 19600-A/85 of 21st February 1985 filed by the Applicant.

The trap is positioned on the duct 20 which directly feeds the chromatographic system, as illustrated in fig. 3.

The configuration of figure 3 foresees that all the flow fed to the transfer tube 20 is directly sent to the gas chromatographic system 40, after passage of the terminal portion of the tube 20 through the trap 44, schematically shown with an inlet 54 and an outlet 56 for the refrigerating fluid and with heating means 58 for desorption.

Downstream of the trap 44, the tube 20 enters the chromatographic system 40 in correspondence with a small block 60, heated in 62. Downstream of the small block 60, the tube 20, made of fused silica, enters a fitting 64 forming a chamber 66 where the open end of the tube 20 comes out. Also the upstream end of the gas chromatographic capillary column 68 comes out at said end. The chamber 66 also receives a feeding duct 70 for make-up gas and a duct 72 for exhaust towards the outside, controlled by a valve set 74.

During the sample reconcentration, the valve set 74 remains open in order to exhaust (split) towards the outside most of the gas coming from the tube 20, with the cooperation of the make-up gas which at this stage conveys gas from the tube 20 towards the outlet, assuring the appropriate flow in the column 68. At the end of reconcentration, the valve set 74 is closed and the sample, reconcentrated and desorbed, is introduced into the column 68 to be gas chromatographically analysed. At this stage, the make-up gas coming from the duct 70 prevents the sample from reaching the dead spaces of the chamber 66 thus polluting them. It must be noted that a Y-shaped fitting 76 may connect the capillary column 78 not only to the length 68 but also to a length 80 connected to a conventional direct on-column injector, with carrier gas feeding in 84, to be used for operations of the instrument calibration.

## Claims

1. A method for on line interfacing an extraction system using supercritical fluid (SFE) to a system of capillary gas chromatographic analysis (CGC), of the type in which, downstream of the extraction system, the pressure of the supercritical fluid is reduced to values suitable for the gas chromatographic system, characterised in that said pressure reduction is performed outside and upstream of the gas chromatographic system, in that the pressure reduction area is heated and in that decompressed gas with reduced overpressure is carried for a length, towards the gas chromatographic system, through a heated duct.

2. A method according to claim 1, characterised in that a make-up gas or carrier gas is fed to the pressure reduction area in such a quantity as to maintain the sample molecules at the vapor state when the fluid passes from supercritical conditions to gas with reduced overpressure.

3. A method according to claim 1 or 2, characterised in that the heating of the pressure reduction and transport area is of the order of 300-400 degrees C and 150-300 degrees C, respectively.

4. A method according to claim 1, 2 or 3, characterised in that upstream of the gas chromatographic system the gas at reduced overpressure is submitted to an operation of sample reconcentration in a cold trap, and subsequently of desorption of same.

5. A method according to claim 4, characterised in that the ratio of the flowrates of the supercritical fluid ($CO_2$) and make-up gas is adjusted in a way as to avoid the supercritical fluid to be trapped inside the cold trap.

6. A method according to claim 4, characterised in that the gas coming from the trap is mainly discharged towards the outside during the reconcentration stage and forwarded completely to the gas chromatographic column during the subsequent desorption.

7. A method according to claim 6, characterised by a feeding of make-up gas downstream of the cold trap, in such conditions as to facilitate exhaust towards the outside (splitting) during the reconcentration stage and to assure the sample correct transfer to the column during the desorption stage.

8. An interface between an extraction system using fluid in supercritical conditions (SFE) and a system of capillary gas chromatographic analysis (CGC), of the type in which an outlet from the extraction system is provided with a restriction through which decompression of the supercritical fluid takes place until gas at reduced overpressure, suitable for the gas chromatographic system, is obtained, characterised in that the expansion area of the supercritical fluid is outside of the gas chromatographic system, upstream of the same, and is provided with heating means.

9. An interface according to claim 8, characterised in that the decompression area comprises a tube having an internal diameter greater than that of the capillary restriction feeding the supercritical fluid, said tube being equipped with heating means operating from outside, starting from the pressure reduction area and for a predetermined transport length of gas at reduced overpressure.

10. An interface according to claim 9, characterised in that in the vicinity of the pressure reduction area there comes out a feeding tube connected to a make-up gas source.

11. An inteface according to claim 9 or 10, characterised in that the transport tube is a tube made of fused silica with internal diameter of the order of 0.5-0.6 mm.

12. An interface according to claim 9, characterised in that at the end of said transport portion, the transport tube crosses a reconcentration cold trap and is then fluidly connected to the gas chromatographic system.

13. An interface according to claim 12, characterised in that the fluidic connection between the transport tube and the capillary column of the gas chromatographic system is performed in correspondence with a connecting block provided with an exhaust duct towards the outside, controlled by valve means.

14. An interface according to claim 13, characterised in that a feeding duct for additional gas (make-up gas) opens in said connecting block.

15. An interface according to claim 13, characterised in that a splitting device controlled by valve means discharges towards the outside most of the gas coming from the cold trap during reconcentration and remains closed during the desorption stage.

_Fig.1_

_Fig.2_

EP 0 398 852 A2

Fig.3